# EUROPEAN PATENT APPLICATION

(11) **EP 2 306 413 A1**
(43) Date of publication of application: **06.04.2011**
(21) Application number: 09171137.4
(22) Date of filing: 23.09.2009
(51) Int. Cl.: G07F 7/08, G06K 19/06, G06K 19/07

(54) **Electronic purse**

(71) Applicant: NXP B.V., 5656 AG Eindhoven (NL)
(72) Inventor: Al-Kadi, Ghiath, Redhill, Surrey RH1 1DL (GB); Duranton, Marc Andre Georges, Redhill, Surrey RH1 1DL (GB)
(74) Representative: Ashton, Gareth Mark

(57) **Abstract**

An electronic purse comprises a memory device for storing a level of funds in the purse and a processor. A bistable funds level indicator is provided for indicating whether the funds stored are above or below a threshold. The invention thus enables an electronic purse to provide an indication of the funds level stored (in particular a warning that funds are low).

## Description

This invention relates to electronic purses (otherwise known as E-purses).

An electronic purse is an electronic memory device which stores information relating to an amount of funds available. The purse can be used to make purchases. Funds can be transferred into and out of the purse from conventional bank accounts. A significant advantage of the electronic purse is that it does not need to store secure information relating to proper bank account details. Thus, theft of the electronic purse is less inconvenient.

The amount of money stored on the electronic purse can be selected, and this makes it particularly suitable to prevent overspending, for example for children's funds.

The electronic purse is loaded with funds at special ATMs. In some systems, no network access is required by the payment collection terminal to receive funds from the electronic purse. The use of the electronic purse system is therefore complementary to the online electronic point-of-sale payment system which transfers payments in real-time.

Smartcards are well known and are more and more being used for E-purse applications such as the electronic purse system used in The Netherlands, known as Chipknip. The main limitation of the smartcard E-purse application is the absence of a feedback system on the smartcard itself. The user doesn't know how much is left in his electronic purse.

The solution of building a display into the smartcard is too expensive and is incompatible with the ultra low power requirements of smartcards.

According to the invention, there is provided an electronic purse comprising:
a memory device for storing a level of funds in the purse;
a processor; and
a bistable funds level indicator for indicating whether the funds stored are above or below a threshold, wherein the memory device, processor and funds level indicator are all integrated into a single device.

The invention thus enables an electronic purse to provide an indication of the funds level stored (in particular a warning that funds are low). The bistable indicator has no power consumption once it has been set to the desired output state, which makes it suitable for an electronic purse application, which is typically implemented as a smartcard.

The funds level indicator can be a small low cost device (3mmx3mm for example).

The funds level indicator can have two output states with different visual appearance. For example, the two output states can be different colour. However, other possibilities exist, for example a symbol (e.g. an exclamation mark) can be revealed or hidden.

A drive circuit can be provided for driving the bistable funds level indicator in dependence on the threshold and the stored level of funds.

A threshold register can be provided for storing the threshold.

In one example, the threshold setting means is adapted to set the threshold in response to funds transfers to the electronic purse. This means the funds transfer can be standard, so that the implementation of the invention requires modification only to the electronic purse. This is a stand alone setup requiring no modification to the smartcard reader. The threshold can be set as the most recent funds transfer. Setting of the threshold can require two funds transfers in quick succession.

In another example, the threshold setting means is adapted to set the threshold in response to commands received from a smartcard reader. This is a smartcard reader setup. This allows more functions to be implemented but requires modification to the smartcard reader functionality of an existing system.

The funds level indicator can comprise an electrophoretic cell. This can be implemented with low cost - for example with plastics materials. The single device into which the different components are integrated preferably comprises a smartcard.

The invention also provides an electronic purse system, comprising:
an electronic purse of the invention; and
a smartcard reader for controlling the loading of funds to the purse, wherein the smartcard reader comprises means for setting the threshold to a user-selected value.

The invention also provides a method of using a electronic purse, comprising:
comparing the funds stored in the electronic purse with a threshold, and operating a bistable funds level indicator of the electronic purse to indicate whether the funds stored are above or below the threshold.

The comparison can be carried out each time funds are added to or taken off the electronic purse.

The threshold can be set based on the funds transferred to the purse, for example in response to two funds transfers to the electronic purse in quick succession, based on the amounts of the two funds transfers (e.g. the last transfer).

An example of the invention will now be described with reference to the accompanying drawings, in which:
Figure 1 shows an example of electronic purse of the invention;
Figure 2 shows how threshold setting can be implemented based on funds transfer amounts;
Figure 3 shows how the circuit functions can be divided within the device; and
Figures 4 and 5 are flowcharts of the smartcard reader based system and its operations.

The invention provides an electronic purse in which a bistable funds level indicator indicates whether the funds stored are above or below a threshold.

This funds level indicator can comprise a small low cost device, for example a 3mm x 3mm area that gives a colour code indicating the money balance of the electronic purse. The funds level indicator changes colour if the stored funds are below a determined value. The warning system provided by the funds level indicator is updated during the usage of the electronic purse.

The funds level indicator can use the technology of an electrophoretic display device. Electrophoretic display devices are one example of bistable display technology, which use the movement of charged particles within an electric field to provide a selective light scattering, subtractive or absorption function.

It has been recognised that electrophoretic display devices enable low power consumption as a result of their bistability (an image is retained with no voltage applied), and they can enable thin display devices to be formed as there is no need for a backlight or polariser. They may also be made from plastics materials, and there is also the possibility of low cost reel-to-reel processing in the manufacture of such displays.

Passive addressing schemes can also be employed, which simply require the application of voltages to the electrodes. The simplest configuration is a reflective display.

In one example, "in plane switching" can be used. This type of device uses selective movement of the particles laterally in the display material layer. When the particles are moved towards lateral electrodes, an opening appears between the electrodes, through which an underlying surface can be seen (the particles are suspended in a clear suspension liquid). The in-plane electrodes may all be provided on one substrate.

In this configuration, the display has a rear surface of a first colour and light reflecting particles of a second colour. The particles are controlled either to be spread across the output area so that the second colour is seen, or they are moved to one side out of view of the user, to form an opening which allows the first colour to be seen.

In another example, transverse electric fields can be used. This type of device uses selective movement of the particles vertically in the display material layer. When the particles are moved towards a top surface, their colour is seen by the user. If the particles are spread uniformly throughout the display layer, the colour of the display layer suspension is seen. Thus, this arrangement has particles of one colour in a suspension of another colour.

These types of display can have low power consumption, good brightness and are also bistable in operation, and therefore able to display information even when the display is turned off.

This invention can be implemented with a single cell. Thus, the technology of an electrophoretic display device is used, but only a single pixel is in fact required for the most basic implementation.

These basic technologies can be implemented with the required low thickness, cost and power consumption for smartcard applications.

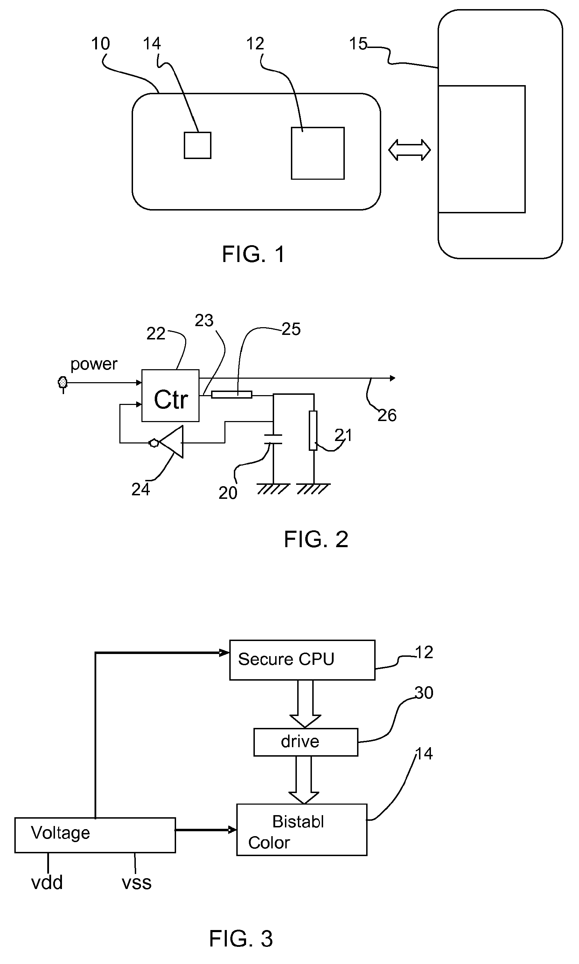

Figure 1 shows an example of electronic purse of the invention.

The electronic purse 10 comprises smartcard with the usual memory chip and processor 12 which can be interrogated by a smartcard reader. The memory device stores a level of funds in the purse. A bistable funds level indicator 14 (as explained in detail above) indicates whether the funds stored are above or below a threshold. A smartcard reader is shown as 15 for communicating with the smart card for loading funds onto the smartcard or deducting funds when a payment is made.

The electronic purse requires a threshold to be stored for the control of the funds level indicator. This can be factory set, and does not have to be changeable. However, preferably the user can set the threshold value. There are two different approaches for this.

One is a stand alone setup, in which the smartcard does not require any special input from the smartcard reader, and can therefore be used with existing smartcard readers. The other is a system based on the smartcard reader providing this additional information to the smartcard.

In both setups, the system is composed of following three operations:
- setting the value of a threshold register within the memory device 12;
- implementing a comparison system; and
- controlling the switching of the bistable indicator 14.

An example of the stand alone set-up will first be described.

In the stand alone system, all operations are embedded in the smartcard itself and therefore there is no need for any adaptation to the smartcard reader or to the communication standard.

The smartcard can be programmed by performing a sequence of successive operations, e.g. setting up the threshold register can require 2 successive operations.

In a simplest version, the most recent amount loaded to the smartcard is set as the threshold. Thus, the user can set up the value of the threshold register by loading an amount of money to the electronic purse in the card twice. The absolute value of the second amount will be the last written in the threshold register (and of course, added to the purse value). This means the threshold will be reset each time money is loaded, and this may not be desirable, for example if a single threshold is desired all the time.

Therefore, a time limit can be set, so that a threshold is only set if there are two transactions in quick succession. Thus, a single funds transfer will not overwrite the threshold, and a special set of operations is used to adjust the threshold.

In this case, the user can set up the value of the threshold register by loading an amount of money to the electronic purse in the card twice in a limited amount of time. Again, the absolute value of the second amount can be written in the threshold register (and of course, added to the purse value).

In each case, for example, if the user wants to reload the purse with 30 Euros, and wants to set up the threshold register to 5 Euros, a first funds transfer to the card of 25 Euros is implemented, and then a funds transfer of 5 Euros.

Figure 2 shows how this system can be implemented with an analogue solution and providing the limited time period. A small capacitor 20 maintains its charge for few minutes, and this defines the time between two transactions that will determine whether or not to load data to the threshold register.

If the capacitor is still charged, then the new loaded amount is also loaded in the threshold register.

Initially, the capacitor 20 is discharged (by the resistor 21). Then power is initially received when the device is coupled to a smartcard reader. A logic device 22 has an active "1" value on both inputs (the first logical "1" provided by the power signal, and the second by the discharged capacitor, which provides a logical "0" to the inverter 24, therefore setting a logical "1" to the second input of the logic device 22). In this case, the logic device 22 does the following actions:
- It sets the output signal 26, which enables the writing of the threshold register, to a logical state "0" (so no update of the threshold register).
- It set its output 23, connected to the capacitor, to "1", therefore charging the capacitor. Resistor 25 limits the charging current.

The logic device 22 remains in this state until the power is disconnected (even if the output of 24 changes due to the discharge of the capacitor). The logic device 22 can be implemented for example with a flip-flop or a latch for this purpose.

The next time the system is coupled to a smartcard reader, the power signal is at logical "1" again. If the delay between the two power on operations is low enough (determined by the capacitor 20 and resistor 21), then the logic device 22 has one input set to "1" (by the power signal) and the other to "0", because the capacitor still has a charge large enough to impose a logic level "1" to the input of the inverter 24, therefore forcing the second input of the logic device 22 to "0". In this case, the logic device 22 does the following actions:
- It sets the output signal 26, which enables the writing of the threshold register, to a logical state "1 ", therefore enabling the update of the threshold register.
- It sets its output 23, connected to the capacitor, to "0", therefore further discharging the capacitor.

Thus, if a second fund transfer is received by the card while the output signal 26 is still high, the amount is used to overwrite the register.

The same functions can be implemented digitally. The digital transaction record on the smartcard itself is then used. The CPU of the smartcard can set the threshold register with the transaction value if the time between the two transactions is smaller than a particular time delay (5 min). This will need only a software modification on the smartcard controller program.

For the comparison function, the smartcard CPU evaluates after each transaction the E-purse remaining balance and compares it with the (factory or user selectable) threshold register.

Figure 3 shows the bistable colour indicator 14, and the driver circuit 30 that is controlled by the smartcard processor 12.

The smartcard processor enables the bistable colour indicator driver 30 to setup a particular colour mode. For example:
Red = the card balance is between 0 and the threshold value
Green = The card balance is greater than the threshold value.

A possible extension is to have multiple threshold values. These can be displayed with multiple pixels, each bistable between a neutral value (threshold not reached) and a value indicating that the particular threshold has been reached, Each pixel has a different threshold, so that together they can provide a thermometer-type output interface, i.e. a visual funds level indicator with as many levels as pixels.

Multiple states can of course be represented in different ways by having multiple cells. For example two cells can be used. For example Green+Green = above threshold, Red+Green = below threshold, Red+Red = zero balance.

For security reasons, the electronic part 30 commanding the bistable indicator 14 is separated from the rest of the smartcard controller 12 (at least logically): it will only be able to read the bit resulting from the comparison between the actual value stored in the E-purse and the threshold register.

An example of the smartcard reader set-up will now be described.

Again, the smartcard reader, after each payment, evaluates the E-purse balance and compares it with the user selected (or factory set) warning value or values. Based on the output of the comparison, the smartcard reader changes the colour of the small bistable colour indicator into a different colour as explained above.

However, in this method the value of the threshold register can be setup by the smartcard reader: the user, after verification according to his pincode, will be able to setup the value that is desired.

The bistable colour indicator does not in this case need to be connected to the smartcard processor. Instead, the bistable colour indicator driver can be located in the reader device.

The bistable colour indicator is then fully independent of the smartcard system on chip and has its separated interface to the reader. An advantage of this approach is that no change in the smartcard controller is required (so no new qualification or security breach). Of course, this means the smartcard readers need to be prepared for driving the indicator.

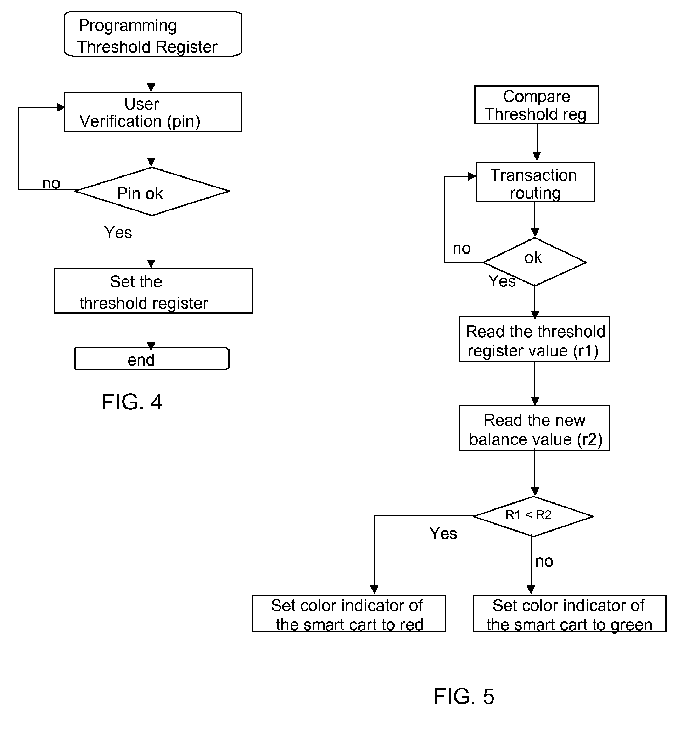

Figures 4 and 5 are flowcharts of the smartcard reader based system and its operations.
Figure 4 shows the threshold setting, which is essentially a function performed at the ATM where the funds transfer is implemented.
Figure 5 shows the threshold comparison function. When a transaction has been successfully set up, the threshold register is read and compared with the balance, in order to control the funds level indicator.

The invention provides a simple visual feedback system, and gives a low cost solution. The devices uses low power and no energy is required during the standby mode of the smartcard.

The standalone system does not require any modification of the current smartcard-reader, or a reader driven solution is also possible.

Only one example of bistable display technology has been described, but other examples are possible such as cholesteric displays or electronic paper type displays.

The detailed design of the smartcard processor and memory has not been given, as this is completely conventional. Similarly, the smartcard reader can be conventional. Any modifications to the smartcard or the smartcard reader in order to implement the invention will be routine to those skilled in the art.

The circuit for providing a time window for setting the threshold is only one possible example of circuit. Other functions can be set up for which the circuit can be modified. For example, the user could be able to select a desired colour to be viewed when the threshold is reached. Three successive operations can be performed for this purpose, and the circuit can be modified to interpret a third funds transfer amount as an instruction in respect of a setting of the funds level indicator. Any configuration setting of the device could be implemented in this way, as an extension of the basic idea.

Various other modifications will be apparent to those skilled in the art.

## Claims

1. An electronic purse comprising:
a memory device (12) for storing a level of funds in the purse;
a processor (12); and
a bistable funds level indicator (14) for indicating whether the funds stored are above or below a threshold, wherein the memory device, processor and funds level indicator are all integrated into a single device (10).

2. An electronic purse as claimed in claim 1, wherein the funds level indicator (14) has two output states with different visual appearance for example of different colour.

3. An electronic purse as claimed in claim 1 or 2, further comprising a drive circuit (30) for driving the bistable funds level indicator (14) in dependence on the threshold and the stored level of funds.

4. An electronic purse as claimed in any preceding claim, wherein the funds level indicator (14) comprises an electrophoretic cell.

5. An electronic purse as claimed in any preceding claim, wherein the single device (10) comprises a smartcard.

6. An electronic purse as claimed in any preceding claim, comprising a threshold register for storing the threshold.

7. An electronic purse as claimed in claim 6, further comprising means for setting the threshold based on the funds transferred to the purse.

8. An electronic purse as claimed in claim 7, wherein the threshold setting means is adapted to set the threshold in response to commands received from a smartcard reader (15).

9. An electronic purse as claimed in claim 6, wherein the threshold setting means is adapted to set the threshold in response to two sequential funds transfers to the electronic purse in quick succession, based on the amounts of the two funds transfers.

10. An electronic purse system, comprising:
an electronic purse (10) as claimed in any one of claims 1 to 7; and
a smartcard reader (15) for controlling the loading of funds to the purse, wherein the smartcard reader comprises means for setting the threshold to a user-selected value.

11. A method of using a electronic purse, comprising:
comparing the funds stored in the electronic purse (10) with a threshold, and operating a bistable funds level indicator (14) of the electronic purse to indicate whether the funds stored are above or below the threshold.

12. A method as claimed in claim 11, wherein the comparison is carried out each time funds are added to or taken off the electronic purse (10).

13. A method as claimed in claim 11 or 12, further comprising setting the threshold based on the funds transferred to the purse.

14. A method as claimed in claim 13, wherein the threshold is set in response to two sequential funds transfers to the electronic purse in quick succession, based on the amounts of the two funds transfers.

15. A method as claimed in claim 13, wherein the threshold is set in response to commands received from a smartcard reader.
